(19) Europäisches Patentamt / European Patent Office / Office européen des brevets

(11) **EP 2 512 026 A1**

(12) **EUROPEAN PATENT APPLICATION**
published in accordance with Art. 153(4) EPC

(43) Date of publication:
**17.10.2012 Bulletin 2012/42**

(51) Int Cl.:
*H02P 3/18* (2006.01)    *B60L 7/14* (2006.01)

(21) Application number: **09852048.9**

(86) International application number:
**PCT/JP2009/070563**

(22) Date of filing: **08.12.2009**

(87) International publication number:
**WO 2011/070651 (16.06.2011 Gazette 2011/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Mitsubishi Electric Corporation Tokyo 100-8310 (JP)**

(72) Inventors:
• **KONO, Masaki Tokyo 100-8310 (JP)**

• **HATANAKA, Keita Tokyo 100-8310 (JP)**

(74) Representative: **Zech, Stefan Markus et al Meissner, Bolte & Partner GbR Postfach 86 06 24 81633 München (DE)**

(54) **POWER CONVERSION DEVICE**

(57) Included are a power converter 2 for driving an induction machine 1, a control unit 40 for controlling the power converter 2, and a brake force command computing unit 6 for computing a brake force command. The control unit 40 includes a regenerative brake force computing unit 12. The regenerative brake force computing unit 12 computes a first regenerative brake force BP1 that can be determined based on a d-axis current detected value id, a q-axis current detected value iq, a d-axis voltage command Vd*, a q-axis voltage command Vq*, and speed information ω and also computes a second regenerative brake force BP2 that can be determined based on phase current information Iu to Iw, the d-axis voltage command Vd*, the q-axis voltage command Vq*, and the speed information ω, and then selects any one of the first regenerative brake force BP1 and the second regenerative brake force BP2 according to the speed information ω and outputs the selected one to the brake force command computing unit 6.

FIG.1

EP 2 512 026 A1

**Description**

Field

The present invention relates to a power conversion device installed on an electric vehicle or the like covering a railway vehicle and also an electric automobile, and particularly to a power conversion device for computing a regenerative brake force necessary for cooperation between an air brake and an electric brake. Background

In such a power conversion device installed on the above-mentioned electric vehicle or the like, a regenerative brake and an air brake are generally used in combination. For example, a regenerative brake computed in an inverter without using a special torque sensor or the like is used as a result of regenerative brake computation. As the result of the computation decreases, supplementation with an air brake or something like that is carried out to obtain a stable brake force. More specifically, to achieve a highly reliable regenerative brake control device, a result of the regenerative brake computation performed in the inverter is important. For the result of the regenerative brake force computation, a regenerative brake force outputted from a motor is required to be accurately computed.

Therefore, in a conventional brake torque computation manner, different types of torque computation must be used for different types of motors. For instance, Patent Literature 1 discloses a torque computation method for an induction machine, and Patent Literature 2 discloses a torque computation method for a PM motor (permanent magnet synchronous machine).

Citation List

Patent Literature

    Patent Literature 1: Japanese Patent Application Laid-open No. H07-031179 (equation 3 in paragraph [0015])
    Patent Literature 2: Japanese Patent Application Laid-open No. H10-014273 (equation 26 in paragraph [0049])

Summary

Technical Problem

However, in Patent Literatures 1 and 2, there is no description for a brake torque computation method that can be used for both an induction machine and a PM motor (permanent magnet synchronous machine). In other words, there is no description for a brake torque computation method that can be used for any type of motor. In addition, one problem with the conventional brake torque computation methods is that a regenerative brake force can not be accurately computed when motor constants change according to the operating conditions of an electric vehicle.

The present invention has been made in view of the above circumstances, and it is an object of the invention to obtain a power conversion device that can accurately compute a regenerative brake force even if the motor constants change according to the operating conditions of an electric vehicle.

Solution to Problem

In order to solve the above-mentioned problems and to achieve the object, the present invention provides a power conversion device comprising: a power converter for driving an AC rotating machine; a control unit for controlling the power converter; and a brake force command computing unit for computing a brake force command, wherein the control unit includes a regenerative brake force computing unit that is adapted to: compute a first regenerative brake force based on orthogonal axis currents computed based on current information detected for the AC rotating machine, a voltage command for the power converter, which is computed based on the brake force command, and speed information of the AC rotating machine; compute a second regenerative brake force based on the current information, the voltage command and the speed information; and select any one of the first regenerative brake force and the second regenerative brake force according to the speed information and then output the selected regenerative brake force to the brake force command computing unit. Advantageous Effect of Invention

The present invention has an advantageous effect in that a regenerative brake force can be accurately computed even if the motor constants change according to the operating conditions of an electric vehicle.

Brief Description of Drawings

FIG. 1 is a configuration diagram of a power conversion device according to a first embodiment of the present invention.

FIG. 2 is a configuration diagram of a second torque computing unit shown in FIG. 1.

FIG. 3 is a configuration diagram of a switching determination unit shown in FIG. 1.

FIG. 4 is a chart for illustrating an operation of the power conversion device in the first embodiment of the present invention.

FIG. 5 is a configuration diagram of a power conversion device according to a second embodiment of the present invention.

FIG. 6 is diagram illustrating one configuration example of a magnetic flux computing unit shown in FIG. 5.

FIG. 7 is a diagram illustrating another exemplary configuration example of the magnetic flux computing unit shown in FIG. 5.

FIG. 8 is a chart for illustrating an operation of the power conversion device according to the second embodiment of the present invention.

FIG. 9 is a configuration diagram of a loss computing unit shown in FIG. 5.

FIG. 10 is a configuration diagram of a power conversion device according to a third embodiment of the present invention.

FIG. 11 is a configuration diagram of a switching determination unit shown in FIG. 10.

FIG. 12 is a configuration diagram of a power conversion device according to a fourth embodiment of the present invention.

FIG. 13 is a configuration diagram of a switching determination unit shown in FIG. 12.

Description of Embodiments

Embodiments of a power conversion device according to the present invention will next be described in detail with reference to the drawings. It should be noted that the present invention is not limited to the embodiments.

First Embodiment

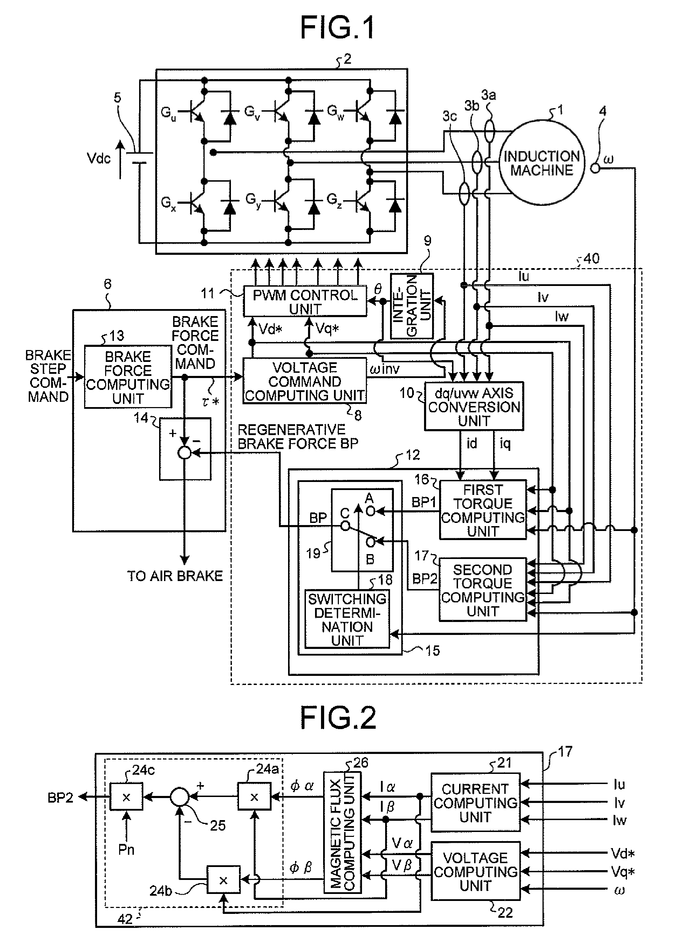

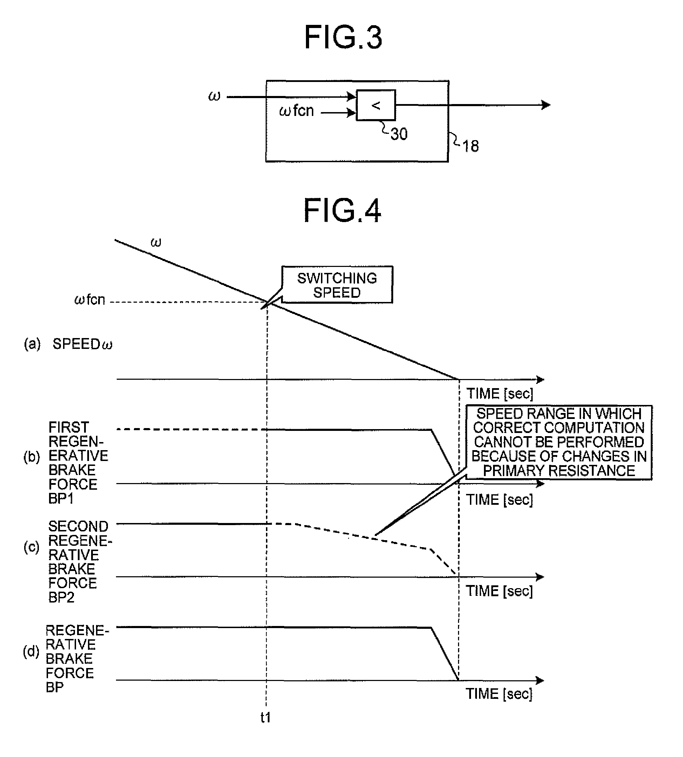

FIG. 1 is a configuration diagram of a power conversion device according to the first embodiment of the present invention. FIG. 2 is a configuration diagram of a second torque computing unit shown in FIG. 1. FIG. 3 is a configuration diagram of a switching determination unit shown in FIG. 1.

The power conversion device shown in FIG. 1 includes as main components: an induction machine 1 being an AC rotating machine; a power converter 2 for driving the induction machine 1; a DC power source 5 connected in parallel to the DC side of the power converter 2; a speed information detection unit 4 for detecting the speed of the induction machine 1; current detectors 3a, 3b and 3c; a brake force command computing unit 6 for actuating a brake device (not shown); and a control unit 40.

The current detectors 3a, 3b and 3c detect phase current information (current information) Iu, Iv and Iw generated by the induction machine 1. The AC-side current detectors 3 shown in FIG. 1 detect currents flowing through lines connecting the power converter 2 and the induction machine 1 by means of CT or the like, but this is not a limitation, and any other publicly-known manners may be used therefor. For example, the current detectors 3 may be configured to detect the phase current information using currents flowing inside the power converter 2, e.g., bus currents. Since a relationship of iu + iv + iw = 0 holds, and so the w phase current, for example, can be determined from the detected currents of two phases of u and v, one of the three current detectors (3c in the above example) may be omitted. The same applies to the case where the v phase current is determined from the detected currents of two phases of u and w.

The control unit 40 is configured to include, as main components, a dq/uvw phase conversion unit (coordinate transformation unit) 10, a regenerative brake force computing unit 12, a voltage command computing unit 8, an integration unit 9, and a PWM control unit 11.

The dq/uvw phase conversion unit 10 performs coordinate transformation to convert the phase current information Iu, Iv, Iw obtained by the current detectors 3 into a d-axis current detected value id and a q-axis current detected value iq on rotating two orthogonal axes (d-q axes) with a phase $\theta$ (hereinafter, referred to as rotary biaxial coordinate). As is well known, when coordinate transformation is performed to convert a three-phase current into a current on the rotating two orthogonal axes, the dq/uvw phase conversion unit 10 requires a control coordinate axis. Let a phase of the control coordinate axis be $\theta$. Then the phase $\theta$ is a value obtained by integrating speed information $\omega$ (that may be referred to as an "angular frequency") in the integration unit 9. In the present embodiment, the angular frequency $\omega$ is

obtained by the speed information detection unit 4 attached to the induction machine 1. However, it is appreciated that an estimated value of the speed that is computed by sensorless speed control without the speed information detection unit 4 attached thereto may be used.

The brake force command computing unit 6 is configured to include a brake force computing unit 13 and a subtracter 14. The brake force computing unit 13 is intended to convert a brake step command outputted from a host system (not shown) such as a control platform into a brake force command. For example, the brake force computing unit 13 performs computation such as multiplication by a coefficient or unit conversion, so as to convert the inputted brake step command into a brake force command. The subtracter 14 subtracts a regenerative brake force BP computed by the regenerative brake force computing unit 12 from the brake force command from the brake force computing unit 13, and then outputs the result to a part for controlling a mechanical brake, not shown, such as an air brake.

The voltage command computing unit 8 computes, based on the brake force command from the brake force command computing unit 6 and the speed information ω detected by the speed information detection unit 4, a d-axis voltage command Vd* and a q-axis voltage command Vq* used to control the power converter 2. The PWM control unit 11 computes three-phase voltage commands Vu*, Vv* and Vw* (not shown) using the d-axis voltage command Vd*, the q-axis voltage command Vq* and the phase θ, generates, based on the three-phase voltage commands Vu*, Vv* and Vw*, gate signals for pulse width control to be performed by the power converter 2, and then outputs the gate signals to the power converter 2.

Description will next be given of the operations of the voltage command computing unit 8 and the PWM control unit 11 and then the configuration and operations of the regenerative brake force computing unit 12, which is a characteristic part of the present invention. The voltage command computing unit 8 computes a torque current command Iq* using the brake force command τ* from the brake force command computing unit 6, motor constants of the AC rotating machine, a secondary magnetic flux command φ* determined by the characteristics of the AC rotating machine, and motor constants (a mutual inductance M of the motor, a secondary inductance Lr of the motor, and the number of pole pairs P of the motor), as shown in the equation (1).

$$Iq^{\star} = \frac{\tau^{\star}}{\phi^{\star}} \times \frac{Lr}{M} \times \frac{1}{P} \qquad (1)$$

The voltage command computing unit 8 computes a magnetic flux current command Id* using the secondary magnetic flux command and the mutual inductance M of the motor being a motor constant, as shown in the equation (2).

$$Id^{\star} = \frac{\phi^{\star}}{M} \qquad (2)$$

The voltage command computing unit 8 computes a slip angular frequency command (ωs* using the torque current command Iq*, the magnetic flux current command Id*, and motor constants of the induction machine (the secondary inductance Lr and secondary resistance value Rr of the motor), as shown in the equation (3).

$$\omega s^{\star} = \frac{Iq^{\star}}{Id^{\star}} \times \frac{Rr}{Lr} \qquad (3)$$

The voltage command computing unit 8 computes, based on the slip angular frequency command ωs* and an arbitrary angular frequency ω, an inverter angular frequency ωinv corresponding to a frequency outputted from a power converter 1, as shown in the equation (4).

$$\omega inv = \omega + \omega s^{\star} \qquad (4)$$

The voltage command computing unit 8 computes the d-axis voltage command Vd* and the q-axis voltage command Vq* using the inverter angular frequency ωinv, the torque current command Iq*, the magnetic flux current command Id*, and motor constants (the primary resistance value Rs, primary inductance Ls and leakage inductance σ of the motor), as shown in the equation (5). Here, σ = 1 - M × M/Ls/Lr.

$$Vd = Rs \times Id * -\omega inv \times \sigma \times Ls \times Iq *$$
$$Vq = Rs \times Iq * +\omega inv \times Ls \times Id * \qquad (5)$$

The voltage command computing unit 8 outputs the d-axis and q-axis voltage commands Vd* and Vq* computed using the equation (5) to the PWM control unit 11 and also outputs the inverter angular frequency ωinv computed using the equation (4) to the integration unit 9. As is well known, when coordinate transformation is performed to convert a three-phase voltage or a three-phase current into that on the rotating two orthogonal axes, the integration unit 9 requires a control coordinate axis, and outputs the phase θ of the control coordinate axes is computed based on an arbitrary angular frequency ωinv. The phase θ is obtained by integrating the inverter angular frequency θinv as shown in the equation (6).

$$\theta = \int \omega inv \cdot dt \qquad (6)$$

The PWM control unit 11 computes three-phase voltage commands Vu*, Vv* and Vw* using the d-axis voltage command Vd* and q-axis voltage command Vq* obtained using the equation (5), and the phase θ obtained using the equation (6) (see the equation (8)). However, the voltage phase θv for a voltage command is slightly advanced with respect to the phase θ as shown in the equation (7).

$$\theta v = \theta + \tan^{-1}\left(\frac{Vq *}{Vd *}\right) \qquad (7)$$

The PWM control unit 11 computes the three-phase voltage commands Vu*, Vv* and Vw* based on the voltage phase θv obtained using the equation (7), the d-axis voltage command Vd*, and the q-axis voltage command Vq* as shown in the equation (8).

$$\begin{pmatrix} Vu * \\ Vv * \\ Vw * \end{pmatrix} = \sqrt{(Vd)^2 + (Vq)^2} \begin{pmatrix} \cos(\theta v) \\ \cos(\theta v - \frac{2}{3}\pi) \\ \cos(\theta v + \frac{2}{3}\pi) \end{pmatrix} \qquad (8)$$

The PWM control unit 11 computes gate signals based on the three-phase voltage commands Vu*, Vv* and Vw* so that the power converter 2 can perform pulse width control, and then outputs the computed gate signals to the power converter 2. As a result of that, the power converter 2 is controlled in accordance with the brake force command τ*.
Description will next be given of the regenerative brake force computing unit 12, which is the characteristic part of the present invention. The regenerative brake force computing unit 12 is configured to include, as main components, a first torque computing unit 16, a second torque computing unit 17, and a switching unit 15. The switching unit 15 is configured to include a switching determination unit 18 and a switching processing unit 19.

The first torque computing unit 16 computes a first regenerative brake force BP1 that can be determined based on the d-axis current detected value id, the q-axis current detected value iq, the d-axis voltage command Vd*, the q-axis voltage command Vq*, and the speed data $\omega$, as shown in the equation (9).

$$BP1 = \frac{Vd \times Id + Vq \times Id}{\omega} \tag{9}$$

As shown in FIG. 2, the second torque computing unit 17 is configured to include, as main components, a current computing unit 21, a voltage computing unit 22, a magnetic flux computing unit 26, and a brake computing unit 42. The brake computing unit 42 is configured to include multipliers 24a, 24b and 24c, and a subtracter 25. The second torque computing unit 17 configured in this way computes a second regenerative brake force BP2 that can be determined based on the phase current information Iu, Iv and Iw detected by the current detectors 3, the d-axis and q-axis voltage commands Vd* and Vq*, and the speed information $\omega$. This will be specifically described as follows.

The current computing unit 21 converts the three-phase current information Iu, Iv and Iw into an $\alpha$-axis current I$\alpha$ and a $\beta$-axis current I$\beta$, which are biaxial components on a stationary coordinate system ($\alpha\beta$ coordinate system), as shown in the equation (10).

$$\begin{bmatrix} I\alpha \\ I\beta \end{bmatrix} = \sqrt{\frac{2}{3}} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} Iu \\ Iv \\ Iw \end{bmatrix} \tag{10}$$

The voltage computing unit 22 computes a phase $\theta1$ of the control coordinate axis, that is fixed biaxial coordinate, by integrating the speed information $\omega$, as shown in the equation (11).

$$\theta1 = \int \omega \cdot dt \tag{11}$$

The voltage computing unit 22 converts the d-axis and q-axis voltage commands Vd* and Vq* into an $\alpha$-axis voltage V$\alpha$ and a $\beta$-axis voltage V$\beta$ using the phase $\theta1$, as shown in the equation (12).

$$\begin{bmatrix} V\alpha \\ V\beta \end{bmatrix} = \begin{bmatrix} \cos\theta1 & -\sin\theta1 \\ \sin\theta1 & \cos\theta1 \end{bmatrix} \begin{bmatrix} Vd \\ Vq \end{bmatrix} \tag{12}$$

The magnetic flux computing unit 26 computes an $\alpha$-axis magnetic flux $\phi\alpha$ and a $\beta$-axis magnetic flux $\phi\beta$ based on the above-described $\alpha$-axis current I$\alpha$, $\beta$-axis current I$\beta$, $\alpha$-axis voltage V$\alpha$ and $\beta$-axis voltage V$\beta$, as shown in the equation (13).

$$\phi\alpha = \int \left(V\alpha - Rs \times I\alpha\right) \cdot dt$$
$$\phi\beta = \int \left(V\beta - Rs \times I\beta\right) \cdot dt \qquad (13)$$

The subtracter 25 determines a difference between the output of the multiplier 24a, i.e., the product of the $\alpha$-axis magnetic flux $\phi\alpha$ and the $\beta$-axis current I$\beta$, and the output of the multiplier 24b, i.e., the product of the $\beta$-axis magnetic flux $\phi\beta$ and the $\alpha$-axis current I$\alpha$. The multiplier 24c computes a second regenerative brake force BP2 shown in the equation (14) based on the output of the subtracter 25 and the number of pole pairs Pn which is a motor constant.
$$BP2 = Pn \times \left(\phi\alpha \times I\beta - \phi\beta \times I\alpha\right) \qquad (14)$$

As shown in FIG. 3, the speed information $\omega$ is inputted to a comparator 30 constituting the switching determination unit 18, and a switching speed $\omega$fcn has been set in the comparator 30. The switching determination unit 18 determines the timing of switching between the first regenerative brake force BP1 computed by the first torque computing unit 16 and the second regenerative brake force BP2 computed by the second torque computing unit 17. When the speed information $\omega$ becomes smaller than the switching speed $\omega$fcn, the switching determination unit 18 outputs a switching signal (prescribed signal) for switching a contact of the switching processing unit 19 from B to A.
The switching processing unit 19 switches the contact from B to A based on the switching signal from the switching determination unit 18. Next, the reason that the switching is necessary will be described. The resistance value of the motor varies depending on temperature, and because of the characteristics of the motor, is more affected by changes in the primary resistance Rs in a lower speed range. The first regenerative brake force BP1 does not include the primary resistance Rs, as shown in the equation (9), and is therefore suitable for low speed at which the influence of changes in the primary resistance Rs is low. The second regenerative brake force BP2 includes the primary resistance Rs, as shown in the equations (13) and (14), and therefore is easy to be influenced by changes in the primary resistance Rs. However, since the second regenerative brake force BP1 does not involve the mutual inductance M, secondary inductance Lr and secondary resistance value Rr of the motor, it is robust against changes in these values (even if the values change, the brake force outputted from the AC rotating machine can be accurately computed). The switching unit 15 is configured such that the switching signal is outputted based on the speed condition in light of the characteristics of the forces BP1 and BP2. For an induction machine, the switching speed $\omega$fcn must be determined from motor constants of the induction machine in consideration of changes in the primary resistance. Particularly, the voltage command Vq shown in the equation (5) is used to determine the switching speed $\omega$fcn. This will be described specifically. For instance, while the voltage command Vq is represented by Vq = Rs $\times$ Iq* + $\omega$inv $\times$ Ls $\times$ Id*, $\omega$inv must be selected in consideration of changes in primary resistance by making $\omega$inv $\times$ Ls $\times$ Id* to be larger than Rs $\times$ Iq* in the above equation. Herein, if $\omega$inv = $\omega$fcn, then Rs $\times$ Iq*< $\omega$fcn $\times$ Ls $\times$ Id*, and $\omega$fcn > (Rs $\times$ Iq*)/(Ls $\times$ Id*). Therefore, the switching speed $\omega$fcn can be determined using the above formula. The rated current of the induction machine can be used to determine Id* and Iq*.
FIG. 4 is a chart for illustrating an operation of the power conversion device according to the first embodiment of the present invention. As shown in FIG. 4(a), in the speed range in which the speed information $\omega$ has a higher level than $\omega$fcn, the contact of the switching processing unit 19 is B. Therefore, the second regenerative brake force BP2 shown in FIG. 4(c) is outputted as the regenerative brake force BP to the subtracter 14 of the brake force command computing unit 6 (see FIG. 4(d)).
When the speed information $\omega$ becomes smaller than $\omega$fcn (time t1), the contact of the switching processing unit 19 is switched from B to A. Therefore, the first regenerative brake force BP1 shown in FIG. 4(b) is outputted as the regenerative brake force BP (see FIG. 4(d)). The regenerative brake force BP from the switching processing unit 19 is inputted to the brake force command computing unit 6. The subtracter 14 outputs the brake force obtained by subtracting the regenerative brake force BP from the brake force command $\tau$* to the air brake.
In the description of the present embodiment, the induction machine is used as an AC rotating machine. However, it is appreciated that a PM motor (permanent magnet synchronous machine) can also be used in the same manner.
As described above, the power conversion device according to the present embodiment includes the regenerative brake force computing unit 12 that selects any one of the first regenerative brake force BP1 and the second regenerative brake force BP2 according to the speed information $\omega$ and outputs the selected one to the brake force command computing unit 6. Therefore, even when motor constants change according to the operating conditions of the electric vehicle, the regenerative brake force can be computed more accurately as compared to that in a conventional technique. In the power conversion device in the present embodiment, any AC rotating machine can be used so long as a type of the motor is a sort of an AC rotating machines, such as an induction machine and a PM motor (permanent magnet synchronous machine) which are used for an electric vehicle. In short, any type of motor can be used.

Second Embodiment

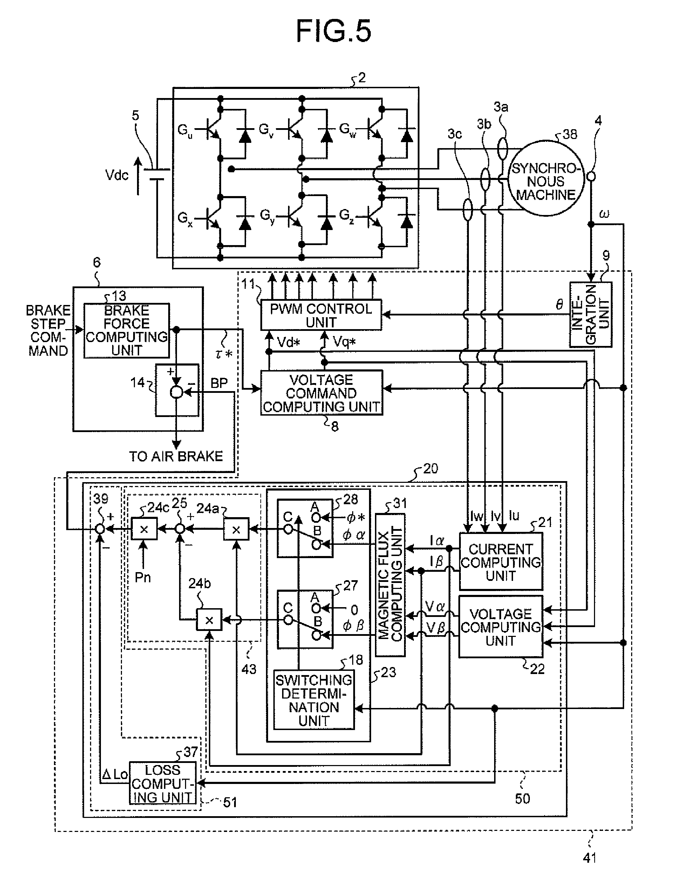

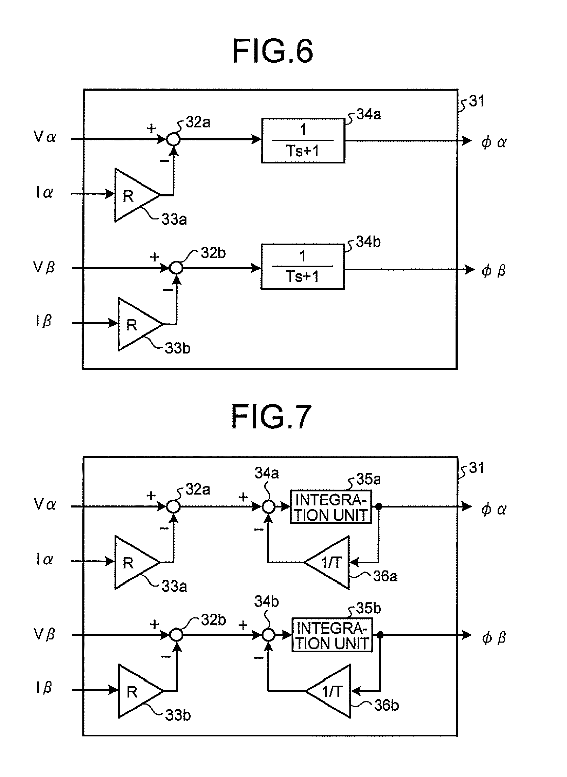

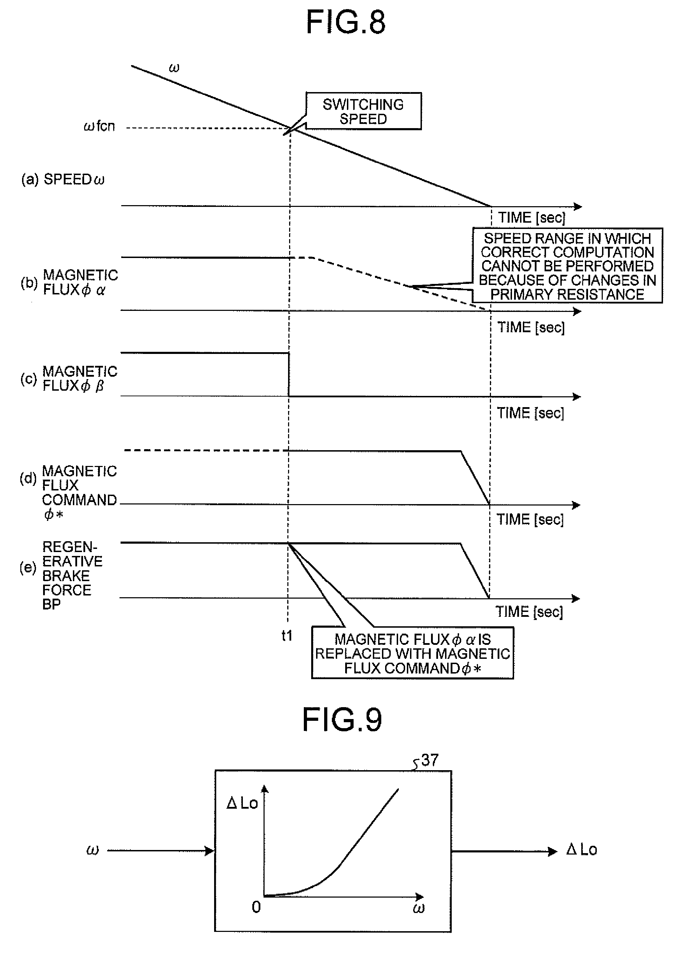

FIG. 5 is a configuration diagram of a power conversion device according to the second embodiment of the present invention. FIG. 6 is a diagram illustrating one configuration example of a magnetic flux computing unit shown in FIG. 5. FIG. 7 is a diagram illustrating another configuration example of the magnetic flux computing unit shown in FIG. 5. FIG. 8 is a chart for illustrating the operation of the power conversion device according to the second embodiment of the present invention. FIG. 9 is a configuration diagram of a loss computing unit shown in FIG. 5. In FIG. 5, a control unit 41 according to the present embodiment is characterized in that the control unit 41 includes only one type of torque computing unit 50 and uses a switching unit 23 to switch the outputs of a magnetic flux computing unit 31 according to a speed condition. The control unit 41 is also characterized by provision of a correction unit 51 for compensating for a reduction in regenerative brake force due to the influence of a loss such as an iron loss. In the description of the present embodiment, a synchronous machine 38 being an AC rotating machine is used, but the same effects can be obtained even when an induction machine is used. Hereinafter, the same components as those in the first embodiment are denoted by the same reference symbols, and the description thereof will be omitted, and only components different from those in the first embodiment will be described.

As shown in FIG. 5, a regenerative brake force computing unit 20 according to the present embodiment is configured to include, as main components, a torque computing unit 50 and a correction unit 51. The torque computing unit 50 is configured to include a current computing unit 21, a voltage computing unit 22, a magnetic flux computing unit 31, a switching unit 23, and a brake computing unit 43. The switching unit 23 is configured to include a switching determination unit 18, a switching processing unit 27, and a switching processing unit 28. As in the brake computing unit 42 shown in FIG. 2, the brake computing unit 43 is configured to include multipliers 24a, 24b and 24c and a subtracter 25. The configuration of the correction unit 51 will be described later.

The magnetic flux computing unit 31 shown in FIG. 6 is configured to include, as main components: a gain unit 33a for multiplying an $\alpha$-axis current I$\alpha$ computed by the current computing unit 21 by a resistance component R; a gain unit 33b for multiplying a $\beta$-axis current I$\beta$ computed by the current computing unit 21 by the resistance component R; a subtracter 32a for subtracting the output of the gain unit 33a from an $\alpha$-axis voltage V$\alpha$ computed by the voltage computing unit 22; a subtracter 32b for subtracting the output of the gain unit 33b from a $\beta$-axis voltage V$\beta$ computed by the voltage computing unit 22; a first-order lag unit 34a; and a first-order lag unit 34b.

In the first embodiment, values after subtraction are integrated to compute the $\alpha$-axis magnetic flux $\phi\alpha$ and the $\beta$-axis magnetic flux $\phi\beta$, as shown in the equation (13). However, in the present embodiment, the $\alpha$-axis magnetic flux $\phi\alpha$ and the $\beta$-axis magnetic flux $\phi\beta$ are computed using the first-order lag units 34a and 34b. One reason that change is made from the integration to the first-order lag is because voltage and current ripples can be effectively removed, and in addition, if pure integration is used, the computation results may diverge when there is a DC offset in the voltages V$\alpha$ and V$\beta$ computed by the voltage computing unit 22, the current detectors 3 or the like. To this end, the use of the approximate integration by the first-order lag units 34a and 34b allows the relationship between the time constant T of the approximate integrators achieved by the first-order lag units and the switching speed $\omega$fcn to be definitized. More specifically, the $\alpha$-axis magnetic flux $\phi\alpha$ and the $\beta$-axis magnetic flux $\phi\beta$, which are the output signals of the first-order lag units 34a and 34b, can be substantially the same as the values obtained by pure integration, for a higher signal than the time constant T. In other words, the values of the output signals $\phi\alpha$ and $\phi\beta$ of the first-order lag units 34a and 34b are different from the values obtained by pure integration in a range lower than the time constant T, and then the reliability is lowered. Therefore, by setting the switching speed $\omega$fcn to be higher than the time constant T, highly reliable values can be selected. The relationship between the time constant T and the switching speed $\omega$fcn can be represented by the equation (15).

$$\omega fcn = \frac{2}{T} \tag{15}$$

The first-order lag units 34a and 34b may be configured to include integration units 35a and 35b, subtracters 34a and 34b, and gain units 36a and 36b, as shown in FIG. 7. By setting the reciprocal 1/T of the time constant T in the gain units 36a and 36b, substantially the same operations as those of the first-order lag units 34a and 34b can be achieved. It seems that the number of components in the configuration shown in FIG. 7 is larger than that shown in FIG. 6. However, the configuration of FIG. 7 offers an aspect that the amount of software can be smaller than that when the first-order lag units 34a and 34b are implemented by software.

As shown in FIG. 5, the $\alpha$-axis magnetic flux $\phi\alpha$ computed by the magnetic flux computing unit 31 and a predetermined preset value (in the present embodiment, a magnetic flux command $\phi^*$, which is a predetermined magnetic flux that can be determined from motor constants) are inputted to the switching processing unit 28, and the switching processing unit 28 selects and outputs any one of the $\alpha$-axis magnetic flux $\phi\alpha$ and the magnetic flux command $\phi^*$ in response to the switching signal (prescribed signal) from the switching determination unit 18. Meanwhile, the $\beta$-axis magnetic flux $\phi\beta$ computed by the magnetic flux computing unit 31 and a predetermined preset value (0 in the present embodiment) are inputted to the switching processing unit 27, and the switching processing unit 27 selects and outputs any one of the $\beta$-axis magnetic flux $\phi\beta$ and 0 in response to the switching signal from the switching determination unit 18.

As in the first embodiment, the speed information $\omega$ is inputted to the switching determination unit 18 shown in FIG. 5, and the switching determination unit 18 determines, based on the speed information $\omega$, the timing of switching from the $\alpha$-axis magnetic flux $\phi\alpha$ to the magnetic flux command $\phi^*$ and the timing of switching from the $\beta$-axis magnetic flux $\phi\beta$ to 0. More specifically, the switching determination unit 18 outputs a switching signal for switching the contacts of the switching processing units 27 and 28 from B to A when the speed information $\omega$ becomes smaller than the switching speed $\omega fcn$.

The reason that the switching is necessary will be described as follows. As shown in FIG. 6, the magnetic flux computing unit 31 uses the resistance R that is a motor constant in the gain units 33a and 33b. Although the actual resistance value of the motor varies depending on temperature, the design value (resistance value) at 115°C, for example, is used as the resistance value (the resistance R described above) for the magnetic flux computation. Therefore, it is natural that a discrepancy occurs between the resistance value used for the magnetic flux computation and the actual resistance value of the motor. This results in a reduction in accuracy of the magnetic flux computation, thereby affecting the accurate torque computation. This influence is more significant in a lower speed range for the reason of the characteristics of the motor.

Therefore, the switching processing unit 27 switches its contact from B to A in response to the switching signal when the speed information $\omega$ becomes smaller than $\omega fn$ and outputs 0. The actual $\beta$-axis magnetic flux $\phi\beta$ of the motor becomes substantially 0 when the speed is low, and therefore the substitution of 0 for the magnetic flux $\phi\beta$ does not cause any problems.

The switching processing unit 28 switches its contact from B to A in response to the switching signal when the speed information $\omega$ becomes smaller than $\omega fn$ and outputs the magnetic flux command $\phi^*$. The actual $\alpha$-axis magnetic flux $\phi\alpha$ of the motor becomes substantially the same as the magnetic flux command $\phi^*$ when the speed is low, and thus the substitution of the magnetic flux command $\phi^*$ therefor does not cause any problems.

The output of the switching processing unit 27 is inputted to the multiplier 24a, and the output of the switching processing unit 28 is inputted to the multiplier 24b. The subtracter 25 and the multiplier 24c are the same as those in the first embodiment, and the description thereof will be omitted.

The regenerative brake force computing unit 20 shown in FIG. 5 includes, as a part different from that in the first embodiment, the correction unit 51 configured to include: a loss computing unit 37 that uses the speed information $\omega$ as an input; and a subtracter 39 for correcting the regenerative brake force BP outputted from the brake force command computing unit 50 to the brake force command computing unit 6. The loss computing unit 37 uses the speed information $\omega$ as an input to obtain a loss $\Delta Lo$, such as the iron loss of the motor, that is not taken into consideration for the magnetic flux computing unit 31. When the loss can be estimated in advance from FIG. 8 described later, the loss can be set by a table or can be set as a function of, for example, the speed $\omega$. In this manner, the detailed loss in the motor can be taken into consideration, and therefore the regenerative brake force BP can be caused to match the actual regenerative torque force outputted by the motor. More specifically, in the regenerative brake force computing unit 20 according to the present embodiment, the influence of the iron loss etc. can be taken into consideration, and so the regenerative brake force can be computed accurately.

In a speed range in which the speed information $\omega$ is higher than $\omega fcn$ as shown in FIG. 8(a), the contacts of the switching processing units 27 and 28 are B. Therefore, the outputs from the switching unit 23 are the magnetic fluxes $\phi\alpha$ and $\phi\beta$ shown in FIGS. 8(b) and (c). The output (regenerative brake force BP) of the multiplier 24c is represented by BP = Pn $\times$ ($\phi\alpha \times$ I$\beta$ - $\phi\beta \times$ I$\alpha$) (see FIG. 8(e)).

When the speed information $\omega$ becomes smaller than $\omega fcn$ (time t1), the contacts of the switching processing units 27 and 28 are switched from B to A, and thereby the output of the switching unit 23 is the magnetic flux command $\phi^*$ as shown in FIG. 8(d). Therefore, the output (regenerative brake force BP) of the multiplier 24c is represented by BP = Pn $\times$ $\phi^* \times$ I$\beta$ as shown in FIG. 8(e).

The correction unit 51 described in the second embodiment is also applicable to the control unit 40 in the first embodiment. For instance, this can be achieved by providing the same function as that of the correction unit 51 at the output end of the regenerative brake force computing unit 12 shown in FIG. 1.

As described above, in the power conversion device according to the present embodiment, the torque computing unit 50 computes the $\alpha$-axis voltage V$\alpha$, the $\beta$-axis voltage V$\beta$, the $\alpha$-axis current I$\alpha$, and the $\beta$-axis current I$\beta$, and any one of the magnetic flux command $\phi^*$ and the $\alpha$-axis magnetic flux $\phi\alpha$ is selected according to the speed information $\omega$. Then, the regenerative brake force BP obtained based on the selected magnetic flux is outputted to the brake force command computing unit 6. Therefore, even when motor constants change according to the operating conditions of the electric vehicle, the regenerative brake force can be computed more accurately as compared to that in a conventional technique. In the power conversion device according to the present embodiment, any AC rotating machine can be used so long as the type of motor is an AC rotating machine, such as an induction machine or a PM motor (permanent magnet synchronous machine), used for an electric vehicle. In short, any type of motor can be used.

In the power conversion device according to the present embodiment, only one type of torque computing unit 50 is used. Therefore, the amount of software is smaller than that in the first embodiment, and a low-cost microcomputer can be used. In other words, the cost can be reduced as compared to that in the first embodiment. In the description of the present embodiment, the synchronous machine which is an AC rotating machine is used. However, it is appreciated that an induction machine can also be used in the same manner.

Third Embodiment

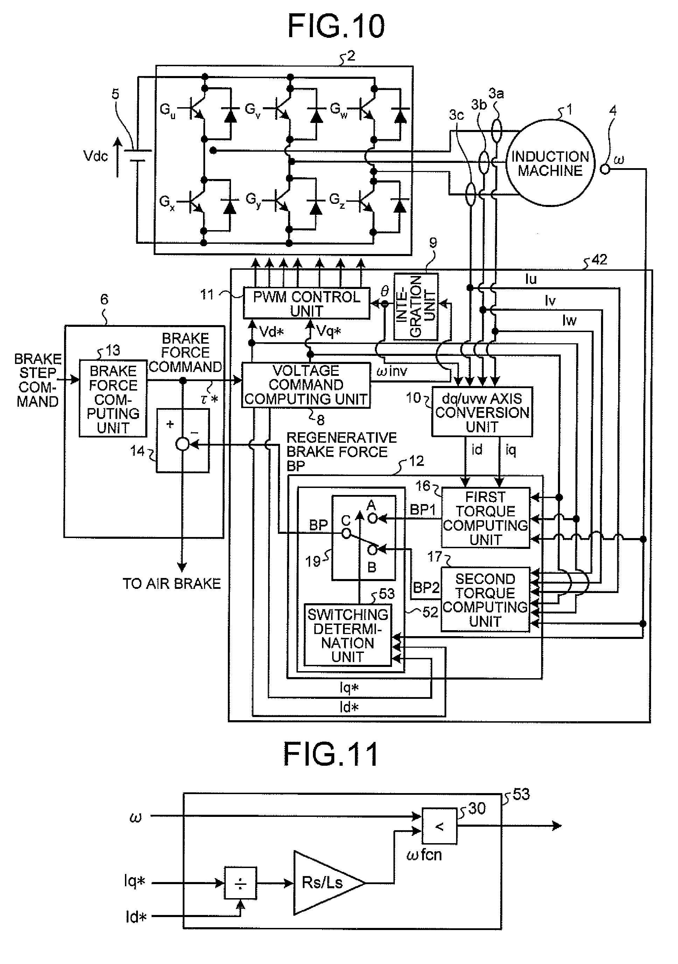

FIG. 10 is a configuration diagram of a power conversion device according to the third embodiment of the present invention, and FIG. 11 is a configuration diagram of a switching determination unit 53 shown in FIG. 10. A control unit 42 according to the present embodiment is characterized in that a computation is performed in the switching determination unit 53 based on motor constants, a magnetic flux current command Id*, and a torque current command Iq*. The same components as those in the first embodiment are denoted by the same reference numerals, and the description thereof is omitted. Only components different from it will be described.

In the switching determination unit 53 shown in FIG. 11, the switching speed $\omega$fcn is determined in the manner described in the first embodiment. More specifically, when an induction machine is used, the switching speed $\omega$fcn must be determined from motor constants of the induction machine in consideration of changes in primary resistance. Particularly, the switching speed $\omega$fcn is determined using the voltage command Vq shown in the equation (5). The voltage command Vq is represented by Vq = Rs $\times$ Iq* + $\omega$inv $\times$ Ls $\times$ Id*. For example, in consideration of changes in primary resistance, $\omega$inv must be selected with $\omega$inv $\times$ Ls $\times$ Id* being larger than Rs $\times$ Iq* in the above equation. If $\omega$inv = $\omega$fcn, then Rs $\times$ Iq*< $\omega$fcn $\times$ Ls $\times$ Id*, and $\omega$fcn > (Rs $\times$ Iq*) / (Ls $\times$ Id*). Therefore, the switching speed $\omega$fcn can be determined using the above formula. The rated current of the induction machine can be used to determine Id* and Iq*. In this way, the present embodiment is characterized in that the switching determination unit 53 is configured such that the switching speed $\omega$fcn is determined using the above inequality. A comparator 30 constituting part of the switching determination unit 53 outputs a switching signal (prescribed signal) for switching the contact of the switching processing unit 19 from B to A when the speed information $\omega$ becomes smaller than the switching speed $\omega$fcn obtained by the above-described computation.

As described above, the power conversion device in the present embodiment includes the regenerative brake force computing unit 12 that selects any one of the first regenerative brake force BP1 and the second regenerative brake force BP2 according to the speed information $\omega$ and then outputs the selected one to the brake force command computing unit 6. Therefore, even when motor constants change according to the operating conditions of the electric vehicle, the regenerative brake force can be computed more accurately as compared to that in a conventional technique.

With the power conversion device according to the present embodiment, the switching speed can be determined in a simpler manner as compared with that in the first embodiment. It is appreciated that this idea is applicable to the configuration of the second embodiment.

Fourth Embodiment

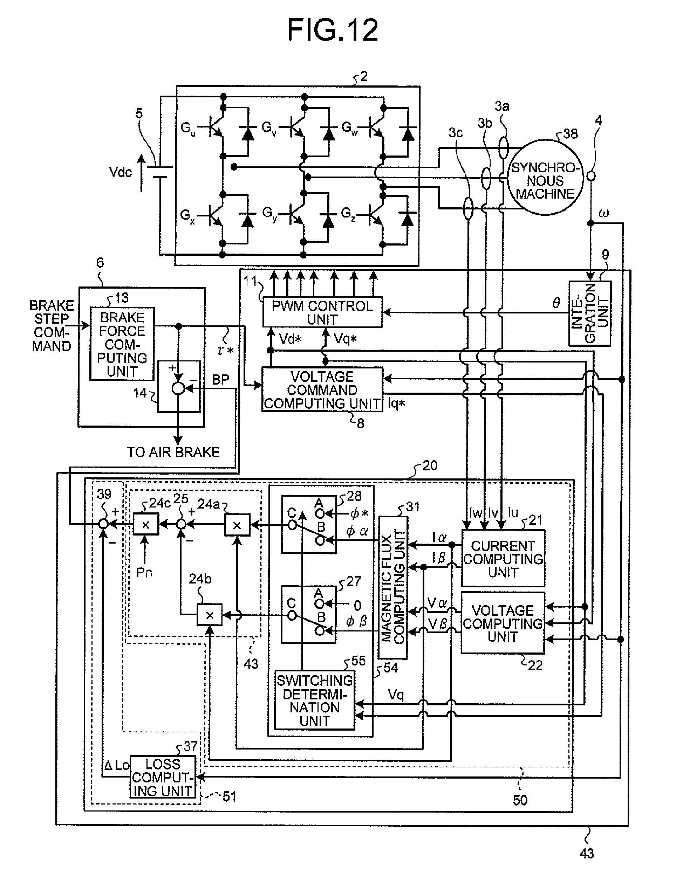

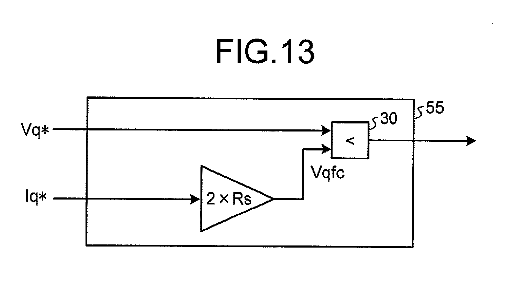

FIG. 12 is a configuration diagram of a power conversion device according to the fourth embodiment of the present invention, and FIG. 13 is a configuration diagram of a switching determination unit 55 shown in FIG. 12. A control unit 43 according to the present embodiment is characterized in that a switching determination unit 55 outputs a switching signal (prescribed signal) under a voltage information condition and thereby a switching unit 54 switches the outputs of the magnetic flux computing unit 31. In the description of the present embodiment, a synchronous machine 38 which is an AC rotating machine is used, but the same effects can be obtained when an induction machine is used. The same components as those in the second embodiment are denoted by the same reference symbols, and the description thereof will be omitted. Only components different from it will be described.

The switching determination unit 55 shown in FIG. 13 is configured as follows. A q-axis voltage command Vq* and a torque current command Iq* are inputted to the switching determination unit 55. Then, in consideration of changes in resistance, a comparator 30 compares the q-axis voltage command (voltage information) Vq* with a value (voltage information) Vqfc obtained by multiplying a resistance R by the torque current command Iq* and then multiplying the resultant value by a coefficient 2 in consideration of changes in resistance. When Vq* becomes larger than Vqfc, the switching signal is outputted. In the present embodiment, the q-axis voltage command is used for switching, but this is not a limitation for the embodiment. It is appreciated that the switching is performed using, for example, the magnitude or modulation factor of the d-axis voltage command, the q-axis voltage command, or the d-axis current command.

As described above, in the power conversion device in the present embodiment, the torque computing unit 50 computes the $\alpha$-axis voltage V$\alpha$, the $\beta$-axis voltage V$\beta$, the $\alpha$-axis current I$\alpha$, and the $\beta$-axis current I$\beta$. The voltage information is used to switch between the magnetic flux command $\phi$* and the $\alpha$-axis magnetic flux $\phi\alpha$, and the selected one is outputted as the regenerative brake force BP. Therefore, even when motor constants change according to the operating conditions of the electric vehicle, particularly even when the resistance changes, the regenerative brake force can be computed more accurately as compared to that in a conventional technique. In the power conversion device according to the present embodiment, any AC rotating machine can be used so long as the type of motor is an AC rotating machine, such as an induction machine or a PM motor (permanent magnet synchronous machine), used for an electric vehicle. In short, any type of motor can be used.

The correction unit 51 described in the second embodiment is also applicable to the control unit 42 in the third embodiment and to the control unit 43 in the fourth embodiment.

Industrial Applicability

As described above, the present invention is applicable to power conversion devices installed on an electric vehicle or the like covering a railway vehicle and an electric automobile. Particularly, the present invention is useful to accurately compute a regenerative brake force even when motor constants change according to the operating conditions of the electric vehicle.

Reference Signs List

| | |
|---|---|
| 1 | INDUCTION MACHINE |
| 2 | POWER CONVERTOR |
| 3a, 3b, 3c | CURRENT DETECTOR |
| 4 | SPEED INFORMATION DETECTION UNIT |
| 5 | DC POWER SOURCE |
| 6 | BRAKE FORCE COMMAND COMPUTING UNIT |
| 8 | VOLTAGE COMMAND COMPUTING UNIT |
| 9 | INTEGRATION UNIT |
| 10 | dq/uvw PHASE CONVERSION UNIT (COORDINATE TRANSFORMATION UNIT) |
| 11 | PWM CONTROL UNIT |
| 12, 20 | REGENERATIVE BRAKE FORCE COMPUTING UNIT |
| 13 | BRAKE FORCE COMPUTING UNIT |
| 14, 25, 32a, 32b, 39 | SUBTRACTER |
| 15, 23, 52, 54 | SWITCHING UNIT |
| 16 | FIRST TORQUE COMPUTING UNIT |
| 17 | SECOND TORQUE COMPUTING UNIT |
| 18, 53, 55 | SWITCHING DETERMINATION UNIT |
| 19, 27, 28 | SWITCHING PROCESSING UNIT |
| 21 | CURRENT COMPUTING UNIT |
| 22 | VOLTAGE COMPUTING UNIT |
| 24a, 24b, 24c | MULTIPLIER |
| 26, 31 | MAGNETIC FLUX COMPUTING UNIT |
| 29 | BRAKE COMPUTING UNIT |
| 30 | COMPARATOR |
| 33a, 33b, 36a, 36b | GAIN UNIT |
| 34a, 34b | FIRST-ORDER LAG UNIT |
| 35a, 35b | INTEGRATION UNIT |
| 37 | LOSS COMPUTING UNIT |
| 38 | SYNCHRONOUS MACHINE |

| 40, 41, 42, 43 | CONTROL UNIT |
| 42, 43 | BRAKE COMPUTING UNIT |
| 50 | TORQUE COMPUTING UNIT |
| 51 | CORRECTION UNIT |
| BP | REGENERATIVE BRAKE FORCE |
| BP1 | FIRST REGENERATIVE BRAKE FORCE |
| BP2 | SECOND REGENERATIVE BRAKE FORCE |
| Id* | MAGNETIC FLUX CURRENT COMMAND |
| Iq* | TORQUE CURRENT COMMAND |
| Iu, Iv, Iw | PHASE CURRENT INFORMATION (CURRENT INFORMATION) |
| Iα | α-AXIS CURRENT |
| Iβ | β-AXIS CURRENT |
| id | d-AXIS CURRENT DETECTED VALUE |
| iq | q-AXIS CURRENT DETECTED VALUE |
| Vα | α-AXIS VOLTAGE |
| Vβ | β-AXIS VOLTAGE |
| Vd* | d-AXIS VOLTAGE COMMAND |
| Vq* | q-AXIS VOLTAGE COMMAND |
| Vu*, Vv*, Vw* | THREE-PHASE VOLTAGE COMMAND |
| $\tau$* | BRAKE FORCE COMMAND |
| ω | SPEED INFORMATION |
| ωfcn | SWITCHING SPEED |
| ωs* | SLIP ANGULAR FREQUENCY COMMAND |
| ωinv | INVERTER ANGULAR FREQUENCY |
| φα | α-AXIS MAGNETIC FLUX |
| φβ | β-AXIS MAGNETIC FLUX |
| φ* | MAGNETIC FLUX COMMAND (PREDETERMINED MAGNETIC FLUX) |

**Claims**

1. A power conversion device comprising:

   a power converter for driving an AC rotating machine;
   a control unit for controlling the power converter; and
   a brake force command computing unit for computing a brake force command,
   wherein the control unit includes a regenerative brake force computing unit that is adapted to:

   compute a first regenerative brake force based on orthogonal axis currents computed based on current information detected for the AC rotating machine, a voltage command for the power converter, which is computed based on the brake force command, and speed information of the AC rotating machine;
   compute a second regenerative brake force based on the current information, the voltage command and the speed information; and
   select any one of the first regenerative brake force and the second regenerative brake force according to the speed information and then output the selected regenerative brake force to the brake force command computing unit.

2. The power conversion device according to claim 1, wherein the control unit includes a correction unit for computing a loss including an iron loss of the AC rotating machine based on the speed information and accordingly correcting the regenerative brake force to be outputted to the brake force command computing unit.

3. The power conversion device according to claim 1, wherein the control unit includes a switching determination unit for generating a prescribed signal used to select any one of the first regenerative brake force and the second regenerative brake force according to the speed information.

4. The power conversion device according to claim 1, wherein the prescribed signal is computed using the orthogonal axis currents and a resistance value included in motor constants of the AC rotating machine.

5. A power conversion device comprising:

a power convertor for driving an AC rotating machine;
a control unit for controlling the power converter; and
a brake force command computing unit for computing a brake force command,
wherein the control unit includes a regenerative brake force computing unit that is adapted to:

compute a magnetic flux using a current and a voltage that are computed based on current information detected for the AC rotating machine;
select any one of the magnetic flux and a set predetermined magnetic flux according to the speed information or voltage information of the AC rotating machine; and
output a regenerative brake force obtained based on the selected magnetic flux to the brake force command computing unit.

6. The power conversion device according to claim 5, wherein the control unit includes a correction unit for computing a loss including an iron loss of the AC rotating machine based on the speed information and accordingly correcting the regenerative brake force to be outputted to the brake force command computing unit.

7. The power conversion device according to claim 5, wherein the control unit includes a switching determination unit for generating a prescribed signal used to select any one of the magnetic flux and a set predetermined magnetic flux according to the speed information or the voltage information.

8. The power conversion device according to claim 5, wherein the prescribed signal is computed using the orthogonal axis currents and a resistance value included in motor constants of the AC rotating machine.

# FIG.1

# FIG.2

# FIG.3

# FIG.4

(a) SPEEDω

SWITCHING
SPEED

ωfcn

TIME [sec]

(b) FIRST
REGEN-
ERATIVE
BRAKE
FORCE
BP1

SPEED RANGE IN WHICH
CORRECT COMPUTATION
CANNOT BE PERFORMED
BECAUSE OF CHANGES IN
PRIMARY RESISTANCE

TIME [sec]

(c) SECOND
REGENE-
RATIVE
BRAKE
FORCE
BP2

TIME [sec]

(d) REGENE-
RATIVE
BRAKE
FORCE
BP

TIME [sec]

t1

# FIG.5

# FIG.6

# FIG.7

# FIG.8

(a) SPEED $\omega$

$\omega$fcn

SWITCHING SPEED

TIME [sec]

(b) MAGNETIC FLUX $\phi$ $\alpha$

SPEED RANGE IN WHICH CORRECT COMPUTATION CANNOT BE PERFORMED BECAUSE OF CHANGES IN PRIMARY RESISTANCE

TIME [sec]

(c) MAGNETIC FLUX $\phi$ $\beta$

TIME [sec]

(d) MAGNETIC FLUX COMMAND $\phi*$

TIME [sec]

(e) REGEN- ERATIVE BRAKE FORCE BP

TIME [sec]

t1

MAGNETIC FLUX $\phi$ $\alpha$ IS REPLACED WITH MAGNETIC FLUX COMMAND $\phi*$

# FIG.9

37

$\Delta$ Lo

$\omega$

0

$\omega$

$\Delta$ Lo

# FIG.10

# FIG.11

# FIG.12

# FIG.13

## INTERNATIONAL SEARCH REPORT

| International application No. |
| --- |
| PCT/JP2009/070563 |

A.   CLASSIFICATION OF SUBJECT MATTER
*H02P3/18*(2006.01)i, *B60L7/14*(2006.01)i

According to International Patent Classification (IPC) or to both national classification and IPC

B.   FIELDS SEARCHED

Minimum documentation searched (classification system followed by classification symbols)
H02P3/18, B60L7/14

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2002-64901 A  (Toshiba Corp.),<br>28 February 2002 (28.02.2002),<br>entire text; all drawings<br>(Family: none) | 1-8 |
| A | JP 3-164003 A  (Toyo Electric Mfg. Co., Ltd.),<br>16 July 1991 (16.07.1991),<br>entire text; all drawings<br>(Family: none) | 1-8 |
| A | JP 10-14273 A  (Railway Technical Research Institute),<br>16 January 1998 (16.01.1998),<br>entire text; all drawings<br>(Family: none) | 1-8 |

☒  Further documents are listed in the continuation of Box C.  ☐  See patent family annex.

| | |
| --- | --- |
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>05 March, 2010 (05.03.10) | Date of mailing of the international search report<br>16 March, 2010 (16.03.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/070563

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-31179 A (Nissan Motor Co., Ltd.), 31 January 1995 (31.01.1995), entire text; all drawings & US 5444351 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07031179 B
- JP H10014273 B